# EUROPÄISCHE PATENTSCHRIFT

(11) **EP 1 985 407 B1**
(45) Veröffentlichungstag und Bekanntmachung des Hinweises auf die Patenterteilung: **18.08.2010**
(21) Anmeldenummer: 08103593.3
(22) Anmeldetag: 17.04.2008
(51) Int. Cl.: B23P 17/06, B21F 45/00

(54) **Verfahren zur Herstellung von Stahlwolle und Stahlschrotkörnern**
Method for producing steel wool and steel shot pellets
Procédé de fabrication de laine d'acier et de grenaille d'acier

(30) Priorität: 27.04.2007 DE 102007020485
(43) Veröffentlichungstag der Anmeldung: 29.10.2008
(73) Patentinhaber: Baumbach, Andreas, 96528 Effelder (DE); Baumbach, Siegfried, 96528 Effelder (DE)
(72) Erfinder: Baumbach, Andreas, 96528 Effelder (DE); Baumbach, Siegfried, 96528 Effelder (DE)
(74) Vertreter: Engel, Christoph Klaus

(56) Entgegenhaltungen:
- DE-A1- 1 627 748
- DE-A1- 2 427 780
- DE-C1- 10 151 585
- DE-C1- 19 901 441

## Beschreibung

Die vorliegende Erfindung betrifft ein Verfahren, welches sich zur kombinierten Herstellung von Stahlwolle und Stahlschrotkörnern eignet.

Stahlschrotkörner werden in Jagd- und Sportwaffenmunition eingesetzt. Um Schrotmunition herzustellen, wird eine größere Anzahl von Schrotkörnern in eine Schrotpatrone eingebracht, die weiterhin eine Treibladung und einen Zünder enthält. Zumeist sind die einzelnen Schrotkörner ungeordnet in einen Schrotbecher eingefüllt, der bei der Schussabgabe durch den Lauf der Waffe gleitet, um die unmittelbare Berührung der Schrotkörner mit der Laufinnenwand zu vermeiden, damit der Lauf nicht beschädigt wird. Die Schrotkörner einer Schrotladung sollen zur Erzielung eines regelmäßigen Schussbildes möglichst die gleiche Größe und ein einheitliches Gewicht aufweisen.

Aus der DE 101 51 585 C1, die dem nächstliegenden Stand der Technik entspricht, ist ein Verfahren zur Herstellung von polygonalen Stahlschrotkörnern bekannt, wobei die Stahlschrotkörner aus einem zylindrischen Stahldraht gefertigt werden, welcher vor dem Abteilen kleiner Stahldrahtabschnitte durch Verformen, insbesondere durch mehrere Walzschritte einen mehreckigen Querschnitt erhält. Die durch das bekannte Verfahren herzustellenden polygonalen Stahlschrotkörner besitzen zwar gegenüber früheren Ausführungen und Fertigungsmethoden zahlreiche Vorteile, jedoch sind auch hier noch aufwändige Verformungsschritte erforderlich, die am Ausgangsmaterial angewendet werden müssen. Gewöhnlicherweise kommen bei den bekannten Verfahren zylindrische Walzstahldrähte mit einem Durchmesser von mehr als 5 mm zum Einsatz, die durch Ziehen und Walzen zu einem Vierkantprofil umgeformt werden.

Prinzipiell dieselben Walzstahldrähte werden als Ausgangsmaterial in anderen technologischen Abläufen eingesetzt, speziell für die Herstellung von Stahlwolle. Stahlwolle wird beispielsweise als Zusatz in Bremsbelägen benötigt. Die dünnen Stahlspäne, welche derartige Stahlwolle bilden, lassen sich zum Beispiel durch Abschälen von einem Walzstahldraht herstellen. Die DE 199 01 441 C1 zeigt eine Maschine zur Herstellung von Stahlwolle, bei welcher ein Stahldraht in mehreren nebeneinander liegenden Drahtwindungen über Umlenkrollen geführt ist, wobei mit Messerschneiden Späne von dem Draht abgeschält werden. Dabei kommt es zu relativ unkontrolliertem Angreifen der Messerschneide am Draht, so dass Stahlspäne nur bis zu einem vorgegebenen Restdurchmesser des Drahtes abgeschält werden können, um ein Zerreißen des Drahtes zu verhindern. Es verbleibt zwangsläufig eine große Abfallmenge an Stahldraht, welcher sich nicht weiter zu Stahlspänen verarbeiten lässt.

Aus der Praxis ist es bekannt, zur Herstellung von Stahlwolle einen zylindrischen Walzdraht zunächst durch Ziehen im Durchmesser zu verkleinern, um dadurch die Zugfestigkeit des Stahldrahtes zu erhöhen. Bei einer Durchmesserreduzierung von beispielsweise 5,5 mm auf 3,2 mm lässt sich durch diese Methode die Zugfestigkeit von etwa 300 N/mm² auf ca. 800 N/mm² steigern. Nachfolgend werden von dem Stahldraht Späne abgeschält, wobei das Schälmesser nur von einer Seite am Draht angreift. Eine Effizienzerhöhung lässt sich durch Anordnung mehrer Schälmesser erreichen, die nacheinander von drei verschiedenen Seiten Späne vom zuvor gezogenen Stahldraht abschälen. Als Abfall verbleibt in diesem Fall ein im Querschnitt dreieckiger Stahldraht, der keiner weiteren Nutzung zugeführt werden kann.

In der DE 1 627 748 A sind ein Verfahren und eine Vorrichtung zur Herstellung von Stahlwolle aus Draht beschrieben. Als Ausgangsmaterial für die Herstellung der Stahlwolle wird Draht mit quadratischem oder rechteckigem Profil verwendet. Von dem quadratischen oder rechteckigen Draht wird die Stahlwolle mit einem Messer abgeschält. Nach diesem Zerspanungsvorgang verbleibt ein Restdraht mit rechteckigem Querschnitt, der nach einer Glühbehandlung als Bindedraht Verwendung finden kann. Als weitere Verwendungsmöglichkeit für den Restdraht nennt diese Druckschrift Heftklammern und Geflechte, die nach entsprechender Behandlung aus dem Restdraht hergestellt werden können. Um eine solche Verwendung des Restdrahtes zu ermöglichen, muss dieser einen ausreichenden Querschnitt aufweisen. Aus dem Ausgangsmaterial lässt sich daher nur relativ wenig Stahlwolle gewinnen.

In der DE 24 27 780 B2 wird ebenfalls ein Stahldraht zum Herstellen von Stahlwolle angegeben, der eine den Schneidwerkzeugen zugekehrte ebene Anschnittfläche aufweisen soll. Dieser Stahldraht ermöglicht zwar die Reduzierung des sogenannten Restsegmentverlustes, jedoch verbleibt auch hier ein Stahldrahtrest, der keiner sinnvollen Verwendung zugeführt werden kann. In dieser Druckschrift wird der durch das nicht zerspanbare Restsegment verursachte prozentuale Materialverlust für quadratische Profile mit 14,2 % und für Runddraht mit 9,6 % angegeben.

Die Aufgabe der vorliegenden Erfindung besteht somit darin, die Nutzung von Walzstahldraht effizienter zu gestalten, insbesondere um bei der Herstellung von Stahlwolle die Abfallmengen zu verringern.

Diese Aufgabe wird durch das im Anspruch 1 angegebene Verfahren gelöst. Für die Erfindung ist von besonderer Bedeutung, dass die Herstellung von Stahlwolle mit der Herstellung von Stahlschrotkörnern kombiniert wird, wodurch die Abfallmenge, die üblicherweise bei der Stahlwolleherstellung verbleibt, nahezu auf null reduziert werden kann. Dazu wird ein als Ausgangsmaterial dienender Stahldraht mit kreisrundem Durchmesser kontrolliert von mehreren Seiten abgeschält, um dem Stahldraht ein vier- oder mehreckiges Profil zu verleihen. Die abgeschälten Stahlspäne stehen als Stahlwolle zur Verfügung. Der verbleibende Stahldraht mit vier- oder mehreckigem Querschnitt dient im weiteren Produktionsprozess unmittelbar als Ausgangsmaterial für die Herstellung von Stahlschrotkörnern. Dazu wird das erzeugte Drahtprofil in kleine Stahldrahtabschnitte zerteilt, die nachfolgend einem Arrondierprozess unterzogen werden, bis die Stahldrahtabschnitte eine polygonale Form besitzen.

Bei der Durchführung des erfindungsgemäßen Verfahrens kann zur Herstellung der Stahlwolle zunächst auf das energieintensive Ziehen des Walzdrahtes zur Erhöhung der Zugfestigkeit verzichtet werden. Da es nicht erforderlich ist, den Walzdraht bis auf einen möglichst geringen Querschnitt abzuschälen, genügt eine deutlich geringere Zugfestigkeit, um das Reißen des Stahldrahtes während des Schälprozesses zu vermeiden. Außerdem lassen sich die Zugkräfte auf den Draht durch gegenüberliegende Anordnung von Schälmessern reduzieren.

Nachdem der Walzstahldraht auf mindestens vier Seiten abgeschält wurde, beispielsweise bis auf einen verbleibenden Umfangsdurchmesser von ca. 3 mm, lässt sich aus diesem mehreckigen Drahtprofil sehr einfach polygonales Stahlschrot herstellen. Das üblicherweise erforderliche Ziehen und/oder Walzen von kreisrundem Walzstahldraht entfällt, da die kurzen Stahldrahtabschnitte direkt aus dem mehreckigen Drahtprofil abgeschnitten werden können. Der erforderliche Arrondierprozess wird verkürzt, da die Zugfestigkeit des Materials nicht durch einen vorangegangenen Ziehvorgang erhöht wurde. Die für Stahlschrot erforderliche Härte ist bei herkömmlichem Stahldraht ausreichend, zumal üblicherweise eine weiche Oberfläche gewünscht ist. Im Regelfall kann damit auch der sonst übliche Wärmebehandlungsschritt zur Verringerung der Oberflächenhärte entfallen, wobei dieser bei abgewandelten Ausführungsformen trotzdem ausführbar bleibt.

Eine bevorzugte Ausführungsform des erfindungsgemäßen Verfahrens zeichnet sich dadurch aus, dass die Stahlspäne in mehreren Lagen vom Walzstahldraht abgeschält werden. Dazu sind mehrere Schälmesser längs der Laufrichtung des Stahldrahts angeordnet. Es ist besonders zweckmäßig, wenn jeweils zwei gegenüberliegende Schälmesser zu einer Schälstufe zusammengefasst sind, wobei mindestens zwei Schälstufen mit um 90° versetzten Schälmessern in Achs- bzw. Längsrichtung des Walzstahldrahtes nacheinander angeordnet sind. Auf diese Weise wird zunächst von zwei Seiten am Stahldraht der Schälprozess gestartet, während die beiden anderen Seiten in der nachfolgenden Schälstufe bearbeitet werden.

Von dem vier- oder mehreckigen Drahtprofil werden vorzugsweise Stahldrahtabschnitte mit einer Länge abgeteilt, die etwa gleich dem Umfangsdurchmesser des Drahtprofils ist.

Sofern das Drahtprofil durch entsprechende Einrichtung der Schälmesser einen quadratischen Querschnitt aufweist, liegen nach dem Abteilen der Stahldrahtabschnitte Stahldrahtwürfel mit einheitlicher Kantenlänge vor. In an sich bekannter Weise werden diese Würfel nachfolgend dem Arrondierprozess unterzogen, um eine polygonale Oberfläche an den Stahlschrotkörnern auszubilden. Die Stahlschrotkörner können bei hohen Qualitätsanforderungen nachfolgend poliert und mit einem Rostschutzmittel beschichtet werden.

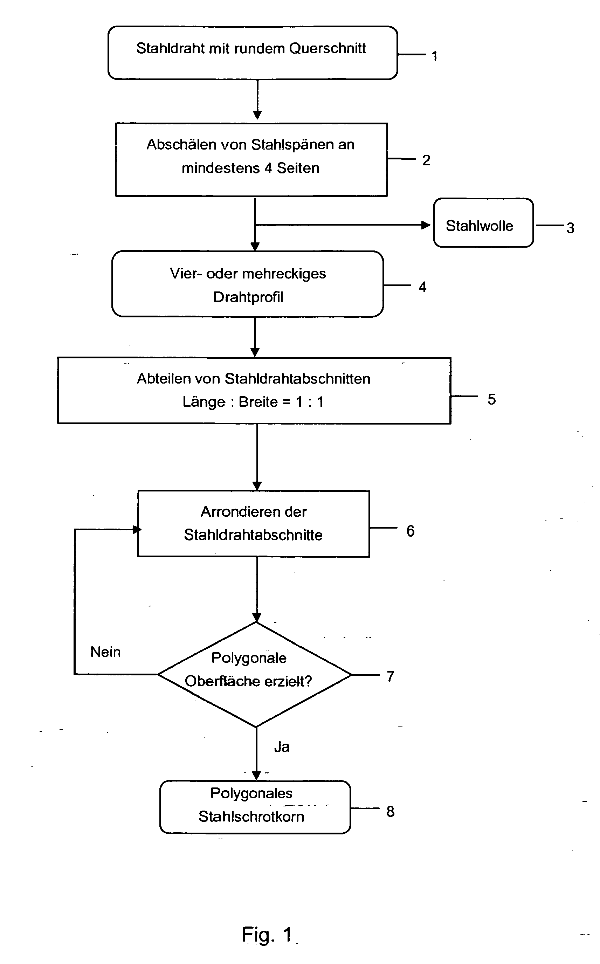

Weitere Vorteile, Einzelheiten und Weiterbildungen ergeben sich aus der nachfolgenden Beschreibung eines bevorzugten Ablaufs des erfindungsgemäßen Verfahrens unter Bezugnahme auf die Zeichnung. Die einzige Figur 1 zeigt dabei einen Ablaufplan eines Verfahrens zur kombinierten Herstellung von Stahlwolle und Stahlschrot.

Im Schritt 1 wird herkömmlicher Stahldraht mit rundem Querschnitt, beispielsweise mit einem Durchmesser von 5,5 mm und einer Zugfestigkeit von etwa 300 N/mm² bereitgestellt. Im nachfolgenden Schritt 2 werden von dem kreisrunden Stahldraht an mindestens vier Seiten Stahlspäne abgeschält. Das Abschälen kann in mehreren Lagen durch nacheinander angeordnete Schälmesser vorgenommen werden. Nach dem Abschälen der Stahlspäne steht im Schritt 3 die Stahlwolle als erstes Verfahrensprodukt zur Verfügung.

Da das Abschälen der Stahlspäne nur bis zu einem vorgegebenen Restdurchmesser bzw. einer Restdicke ausgeführt wird, bleibt im Schritt 4 ein vier- oder mehreckiges Drahtprofil übrig, welches vorzugsweise ohne Verfahrensunterbrechung im laufenden Prozess weiter bearbeitet wird.

Im nachfolgenden Schritt 5 werden von dem mehreckigen Drahtprofil kleine Stahldrahtabschnitte abgeteilt, vorzugsweise in einem Längen/Breitenverhältnis von 1:1. Sofern das im Schritt 4 gelieferte Drahtprofil einen quadratischen Querschnitt aufweist, liegen damit würfelförmige Stahldrahtabschnitte vor. Die Stahldrahtabschnitte werden nachfolgend in an sich bekannter Weise einem Arrondierprozess zugeführt. Das Arrondieren erfolgt im Schritt 6 insbesondere mit Hilfe einer Beschleunigungsvorrichtung, welche die Stahldrahtabschnitte mit hoher Geschwindigkeit auf Prallplatten schleudert. Durch das Auftreffen der Stahldrahtabschnitte auf den Prallplatten werden die Kanten der Stahldrahtabschnitte deformiert, so dass sich polygonale Oberflächenabschnitte ausbilden. Die Stahldrahtabschnitte durchlaufen den Arrondierprozess so lange, bis die gewünschte polygonale Oberfläche des Stahlschrotkorns erreicht ist. Beispielsweise kann eine Endform angestrebt werden, bei welcher der lotrechte Abstand zwischen einer das Stahlschrotkorn vollständig umgreifenden Kugeloberfläche und der Polygonalfläche an keinem Punkt mehr als 20 % des Durchmessers dieser Kugeloberfläche beträgt. Der Arrondierprozess wird abgebrochen, wenn im Schritt 7 festgestellt wird, dass die vorgegebene Bedingung für die polygonale Oberfläche erreicht ist. Im Schritt 8 liegen als zweites Ergebnis des erfindungsgemäßen Verfahrens polygonale Schrotkörner vor.

Bei Bedarf schließen sich Wärmebehandlungsschritte und Oberflächenveredlungsschritte an, um die Stahlschrotkörner an die gewünschten Einsatzzwecke anzupassen. Derartige Oberflächenbehandlungsschritte sind dem Fachmann bekannt, so dass hier auf eine detailliertere Beschreibung verzichtet wird.

Das beschriebene Verfahren wird vorzugsweise in einer einheitlichen Fertigungsstrecke ausgeführt, so dass keine Zwischenlagerung des mehreckigen Drahtprofils nach dem Abschälen der Stahlspäne nötig ist. Es entsteht im Wesentlichen kein Abfall, so dass die Materialverwertung als optimal angesehen werden kann. Vorteilhaft ist dabei auch, dass im Wesentlichen in derselben Fertigungszeit, die im Stand der Technik für die Erzeugung von Stahlwolle benötigt wird, zusätzlich Stahlschrotkörner erzeugt werden, die als zweites verkaufsfähiges Verfahrensprodukt zur Verfügung stehen.

## Patentansprüche

1. Verfahren zur Herstellung von Stahlwolle und Stahlschrotkörnern, die folgenden Schritte umfassend:
- Bereitstellen (1) eines Stahldrahtes mit einem im wesentlichen kreisrunden Durchmesser;
- Erzeugen eines vier- oder mehreckigen Drahtprofils mit einem vorgegebenen Umfangsdurchmesser durch Abschälen (2) von Stahlspänen vom Stahldraht mit Schälmessern, die längs der Achsrichtung Stahlspäne abheben, wobei die Schälmesser an mindestens vier Seiten des Stahldrahtes angreifen;
- Bereitstellen (3) der Stahlspäne als Stahlwolle;
- Abteilen (5) kleiner Stahldrahtabschnitte vom erzeugten Drahtprofil;
- Arrondieren (6) der Stahldrahtabschnitte bis diese eine polygonale Form besitzen;
- Bereitstellen (8) der arrondierten polygonalen Stahldrahtabschnitte als Stahlschrotkörner.

2. Verfahren nach Anspruch 1, **dadurch gekennzeichnet, dass** das Abschälen (2) der Stahlspäne in mehreren Lagen durch mehrere aufeinander folgend angeordnete Schälmesser erfolgt.

3. Verfahren nach Anspruch 1 oder 2, **dadurch gekennzeichnet, dass** durch Abschälen (2) von Stahlspänen mit vier Schälmessern ein im Wesentlichen quadratisches Drahtprofil erzeugt wird.

4. Verfahren nach einem der Ansprüche 1 bis 3 **dadurch gekennzeichnet, dass** beim Abschälen (2) der Stahlspäne jeweils zwei gegenüberliegend angeordnete Schälmesser zu einer Schälstufe zusammengefasst sind, und dass der Stahldraht mindestens zwei in Achsrichtung nacheinander angeordnete Schälstufen durchläuft.

5. Verfahren nach einem der Ansprüche 1 bis 4, **dadurch gekennzeichnet, dass** die Stahldrahtabschnitte mit einer Länge vom erzeugten vier- oder mehreckigen Drahtprofil abgeteilt werden, welche etwa gleich dem Umfangsdurchmesser des Drahtprofils ist.

6. Verfahren nach einem der Ansprüche 1 bis 5, **dadurch gekennzeichnet, dass** die arrondierten Stahlschrotkörner einer Wärmebehandlung zur Verringerung Oberflächenhärte unterzogen werden.

7. Verfahren nach einem der Ansprüche 1 bis 6, **dadurch gekennzeichnet, dass** die Stahlschrotkörner abschließend poliert und mit einem Rostschutzmittel beschichtet werden.

8. Verfahren nach einem der Ansprüche 1 bis 7, **dadurch gekennzeichnet, dass** Walzstahldraht mit einem Durchmesser von > 4 mm, vorzugsweise 5,5 mm verwendet wird.

9. Verfahren nach einem der Ansprüche 1 bis 8, **dadurch gekennzeichnet, dass** der Umfangsdurchmesser des vier- oder mehreckigen Drahtprofils nach dem Abschälen der Stahlspäne < 3,5 mm, vorzugsweise 3,2 mm beträgt.

## Claims

1. A method for the manufacture of steel wool and steel shot pellets comprising the following steps:
- Making available (1) a steel wire with a substantially circular diameter;
- Producing a quadrangular or polygonal wire profile with a given circumferential diameter by paring off (2) steel shavings from the steel wire with paring knives that remove steel shavings along the axial direction, which paring knives attack at least four sides of the steel wire;
- Making available (3) the steel shavings as steel wool;
- Dividing off (5) small steel wire sections from the produced wire profile;
- Rounding-off (6) the steel wire sections until they have a polygonal form;
- Making available (8) the rounded-off polygonal steel wire sections as steel shot pellets.

2. The method according to claim 1, **characterized in that** the paring off (2) of the steel shavings takes place in several layers by several successively arranged paring knives.

3. The method according to claim 1 or 2, **characterized in that** a substantially quadratic wire profile is produced by paring off (2) steel shavings with four paring knives.

4. The method according to one of claims 1 to 3, **characterized in that** during the paring off (2) of the steel shavings each two opposite paring knives are combined to one paring step, and that the steel wire runs through at least two paring steps successively arranged in the axial direction.

5. The method according to one of claims 1 to 4, **characterized in that** the steel wire sections are divided off with a length approximately equal to the circumferential diameter of the wire profile from the quadratic or polygonal wire profile produced.

6. The method according to one of claims 1 to 5, **characterized in that** the rounded-off steel shot pellets can be subjected to a thermal treatment in order to reduce surface hardness.

7. The method according to one of claims 1 to 6, **characterized in that** the steel shot pellets are finally polished and coated with an anti-rust agent.

8. The method according to one of claims 1 to 7, **characterized in that** rolled steel wire with a diameter > 4 mm, preferably 5.5 mm is used.

9. The method according to one of claims 1 to 8, **characterized in that** the circumferential diameter of the quadratic or polygonal wire profile is < 3.5 mm, preferably 3.2 mm after the paring off of the steel shavings.

## Revendications

1. Procédé de fabrication de laine d'acier et de grenaille de ferraille d'acier, les étapes suivantes comprenant :
- la préparation (1) d'un fil d'acier ayant un diamètre essentiellement circulaire ;
- la production d'un profil de fil carré ou polygonal ayant un diamètre périphérique prédéfini en pelant (2) des copeaux d'acier du fil d'acier avec des couteaux éplucheurs qui soulèvent des copeaux d'acier le long de l'axe, sachant que les couteaux éplucheurs se mettent en prise sur au moins quatre côtés du fil d'acier ;
- la préparation (3) des copeaux d'acier comme laine d'acier ;
- la séparation (5) de petits tronçons de fil d'acier du profil de fil produit ;
- l'arrondissage (6) des tronçons de fil d'acier jusqu'à ce que ceux-ci aient une forme polygonale ;
- la préparation (8) des tronçons de fil d'acier polygonaux arrondis comme grenaille de ferraille d'acier.

2. Procédé selon la revendication 1, **caractérisé en ce que** le pelage (2) des copeaux d'acier s'effectue en plusieurs couches par des couteaux éplucheurs placés l'un à la suite de l'autre.

3. Procédé selon la revendication 1 ou 2, **caractérisé en ce que** le pelage (2) des copeaux d'acier avec quatre couteaux éplucheurs produit un profil de fil essentiellement carré.

4. Procédé selon l'une des revendications 1 à 3, **caractérisé en ce que** lors du pelage (2) des copeaux d'acier, deux couteaux éplucheurs respectifs qui se font face sont réunis en un niveau de pelage et que le fil d'acier traverse au moins deux niveaux de pelage placés l'un derrière l'autre dans le sens de l'axe.

5. Procédé selon l'une des revendications 1 à 4, **caractérisé en ce que** les tronçons de fil d'acier sont séparés avec une longueur du profil de fil carré ou polygonal produit qui est à peu près égale au diamètre périphérique du profil de fil.

6. Procédé selon l'une des revendications 1 à 5, **caractérisé en ce que** la grenaille de ferraille d'acier arrondie est soumise à un traitement thermique pour réduire la dureté de surface.

7. Procédé selon l'une des revendications 1 à 6, **caractérisé en ce que** la grenaille de ferraille d'acier est ensuite polie et revêtue d'un agent anti-rouille.

8. Procédé selon l'une des revendications 1 à 7, **caractérisé en ce que** du fil d'acier en rouleau d'un diamètre de > 4 mm, de préférence de 5,5 mm est employé.

9. Procédé selon l'une des revendications 1 à 8, **caractérisé en ce que** le diamètre périphérique du profil de fil carré ou polygonal est de < 3,5 mm, de préférence 3,2 mm après le pelage de copeaux d'acier.
